# FASCICULE DE BREVET EUROPEEN

(11) **EP 1 133 501 B1**
(45) Date de publication et mention de la délivrance du brevet: **12.02.2003**
(21) Numéro de dépôt: 99956134.3
(22) Date de dépôt: 24.11.1999
(51) Int. Cl.: C07F 9/53, G21C 19/46, C22B 3/00

(54) **DERIVES DE CALIXARENES**
CALIXARENDERIVATE
CALIXARENE DERIVATIVES

(30) Priorité: 26.11.1998 FR 9814902
(43) Date de publication de la demande: 19.09.2001
(73) Titulaire: COMMISSARIAT A L'ENERGIE ATOMIQUE, 75752 Paris Cédex 15 (FR)
(72) Inventeur: DOZOL, Jean-François, F-04660 Pierrevert (FR); GARCIA CARRERA, Alejandro, F-13100 Aix en Provence (FR); BOHMER, Volker, D-55126 Mainz (DE); MATTHEWS, Susan, E., D-55122 Mainz (DE)
(74) Mandataire: Audier, Philippe André
(86) Numéro de dépôt international: FR9902893
(87) Numéro de publication internationale: WO00031087

(56) Documents cités:
- WO-A-96/23800
- BARBOSO S.: "Calix(4)arenes with CMPO functions at the narrow rim. Synthesis and extraction properties." JOURNAL OF THE CHEMICAL SOCIETY, PERKIN TRANSACTIONS 2., no. 4, - avril 1999 (1999-04) pages 719-723, XP002130871 CHEMICAL SOCIETY. LETCHWORTH., GB ISSN: 0300-9580

## Description

### Domaine technique

La présente invention a pour objet de nouveaux dérivés de calixarènes, leur procédé de préparation et leur utilisation pour l'extraction des actinides et des lanthanides.

De façon plus précise elle concerne des calixarènes comportant un substituant phosphinoxydo acétamide, qui présentent des propriétés intéressantes pour l'extraction des actinides et des lanthanides, notamment des actinides et lanthanides trivalents.

Ces nouveaux calixarènes sont donc utilisables pour l'extraction des actinides et des lanthanides présents dans des solutions aqueuses telles que les effluents aqueux provenant d'installations de retraitement de combustibles nucléaires usés ou les solutions de dissolution de combustibles nucléaires usés.

### État de la technique antérieure.

On a déjà envisagé d'utiliser des ligands macrocycliques tels que des calixarènes comportant un substituant phosphinoxydo-acétamide, pour extraire des métaux tels que les lanthanides et les actinides, à partir de solutions aqueuses, comme il est décrit dans WO-A-96/23800 [1].

Dans ces dérivés, le substituant phosphinoxydo-acétamido est disposé directement sur les cycles phényle du calixarène.

### Exposé de l'invention

La présente invention a pour objet de nouveaux dérivés de calixarènes comportant un substituant phosphinoxydo-acétamido qui est séparé des cycles phényle du calixarène par une chaîne hydrocarbonée. Par ailleurs, ce substituant phosphinoxydo-acétamido est relié à la fonction hydroxyle du calixarène par cette chaîne hydrocarbonée.

Selon l'invention, le calixarène répond à la formule : 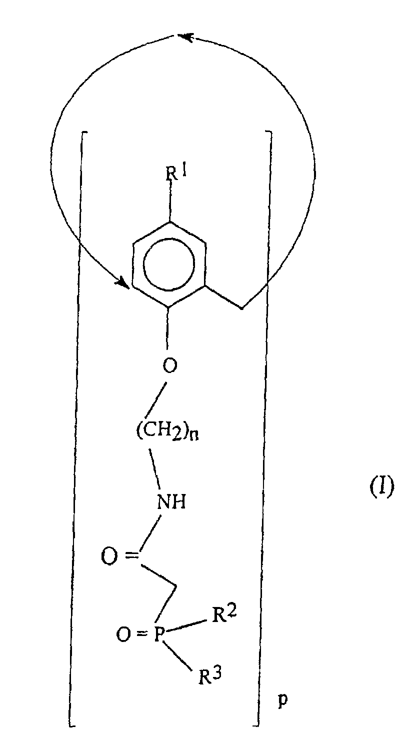 dans laquelle :
- R¹ est un groupe alkyle ou aryle, ou un atome d'hydrogène,
- R² et R³ qui peuvent être identiques ou différents, sont des groupes alkyle ou aryle,
- n est un nombre entier allant de 2 à 8, et
- p est un nombre entier allant de 4 à 8.

Dans ce calixarène, la présence d'une chaîne hydrocarbonée entre le groupe phosphinoxydo-acétamido et le cycle phényle est intéressante car elle permet de régler l'efficacité d'extraction du calixarène vis-à-vis des actinides et des lanthanides.

En effet, cette efficacité augmente avec le nombre d'atomes de carbone de la chaîne hydrocarbonée (CH₂)ₙ, où le nombre d'atomes de carbone n peut aller de 2 à 8, et de préférence de 2 à 5.

Dans la formule (I) donnée ci-dessus R¹ peut représenter un atome d'hydrogène ou un groupe alkyle ou aryle. Les groupes alkyle susceptibles d'être utilisés sont des groupes alkyle, linéaires ou ramifiés, comportant de préférence 1 à 18 atomes de carbone.

A titre d'exemple de groupe R¹, on peut citer le groupe tert-butyle.

Dans la formule (I) donnée ci-dessus R² et R3 peuvent être des groupes alkyle ou aryle. Les groupes alkyle peuvent être linéaires ou ramifiés et ont de préférence de 1 à 18 atomes de carbones. Les groupes aryle utilisables pour R¹, R² et R³ sont des groupes monovalents dérivés d'un noyau aromatique ou hétérocyclique par enlèvement d'un atome d'hydrogène à l'un des atomes de carbone du cycle. A titre d'exemple de tels groupes, on peut citer les groupes phényle, naphtyle, pyridyle, thiophényle et phényle substitué. De préférence, R² et R³ représentent le groupe phényle.

Les calixarènes de l'invention peuvent comporter de 4 à 8 cycles phényle. De préférence, le calixarène comprend 4 cycles phényle (p = 4).

Les calixarènes de formule (I) de l'invention peuvent être préparés par un procédé consistant à faire réagir un dérivé amino-alcoxy calixarène de formule : 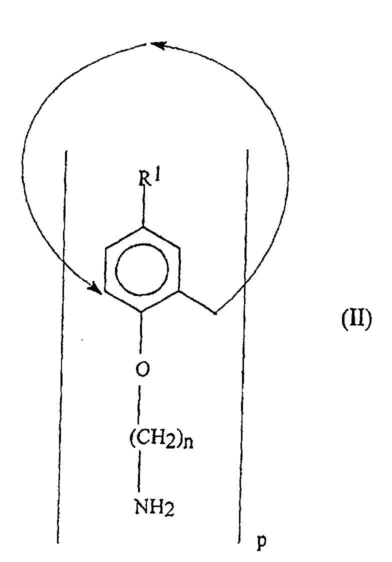 dans laquelle R¹, n et p sont tels que définis ci-dessus, avec un phosphinoxydo-acétate de formule : 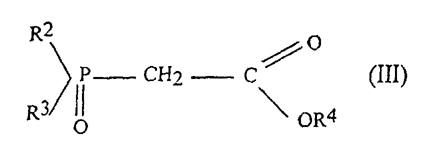 dans laquelle :
R² et R³ sont tels que définis ci-dessus et R⁴ représente le groupe p-nitrophényle ou 2,4-dinitrophényle.

Le phosphinoxydoacétate de formule (III) utilisé dans la dernière étape peut être préparé à partir du phosphinite d'alkyle correspondant de formule : 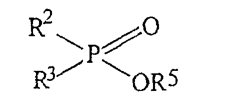 où R² et R³ ont les significations données ci-dessus et R⁵ est un groupe alkyle possédant 1 à 4 carbones, par réaction de celui-ci avec du bromoacétate d'éthyle, suivie d'une hydrolyse et de l'estérification de l'acide obtenu avec du nitrophénol ou du dinitrophénol.

Selon un premier mode de réalisation de l'invention, le dérivé aminoalcoxy calixarène de formule (II) dans laquelle n est supérieur à 2, est préparé par un procédé comprenant les étapes suivantes :
1) réaction d'un calixarène de formule : 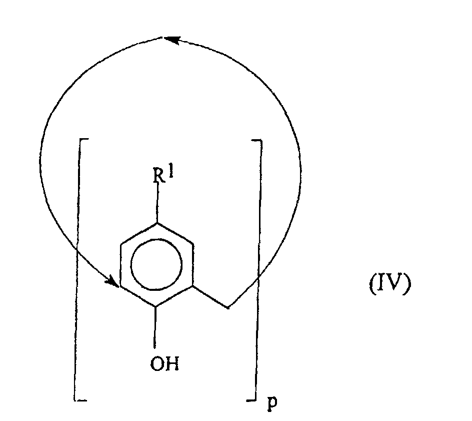 avec R¹ et p ayant la signification donnée ci-dessus avec un N-3(bromoalkyl)phtalimide de formule : 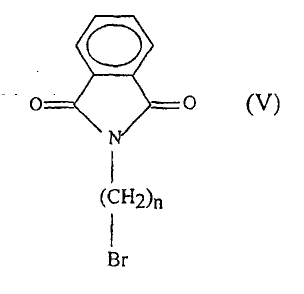 avec n ayant la signification donnée ci-dessus, pour obtenir un (3-phtalimido-alcoxy)calixarène de formule : 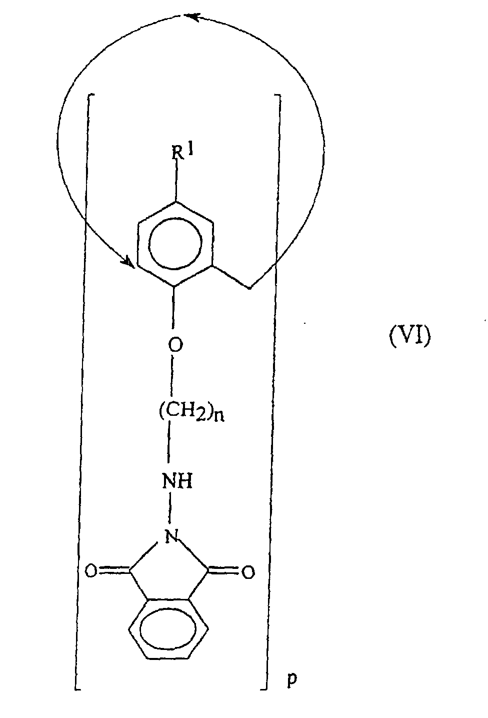 et
2) réaction du composé de formule (VI) avec l'hydrazine.

Selon un second mode de réalisation de l'invention, le dérivé aminoalcoxy calixarène de formule (II) dans laquelle n = 2, est préparé par un procédé comprenant les étapes suivantes :
1) réaction d'un calixarène de formule : 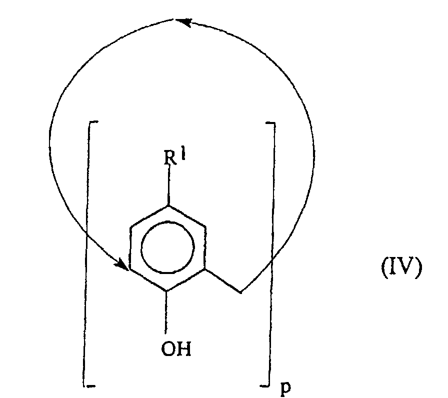 dans laquelle :
   R¹ et p ont la signification donnée ci-dessus, avec un bromoacétate d'alkyle, pour obtenir le dérivé de calixarène de formule : 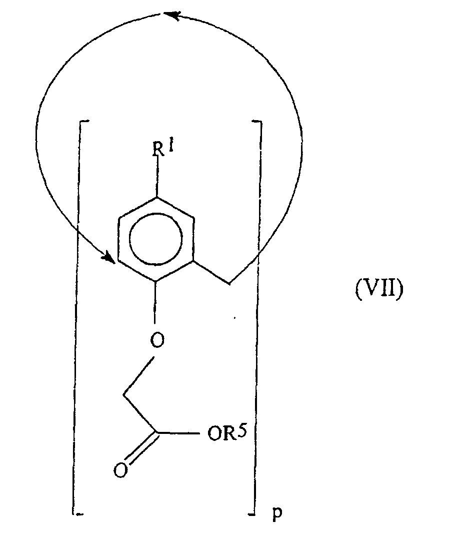
   avec R¹ ayant la signification donnée ci-dessus et R⁵ représentant un groupe alkyle,
2) réduction du dérivé de calixarène de formule (VII) pour obtenir le dérivé hydroxylé de formule : 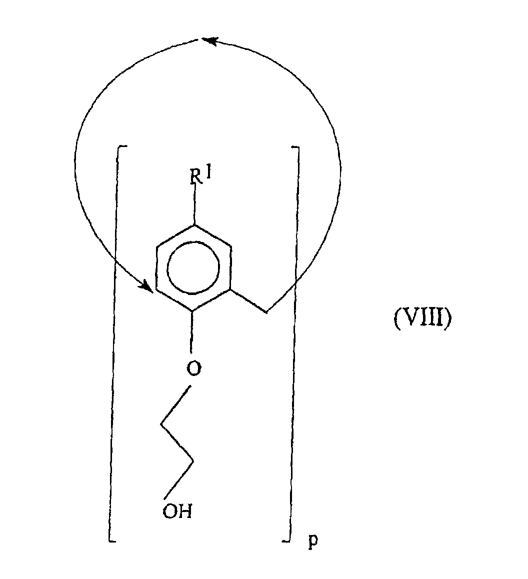
3) réaction du dérivé hydroxylé de formule (VIII) avec le chlorure de tosyle pour obtenir le dérivé tosylé de formule : 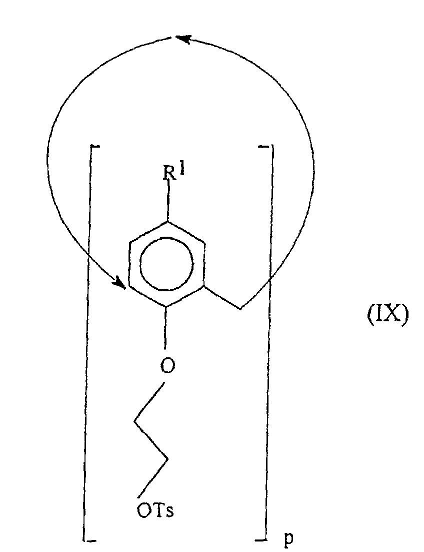 dans laquelle Ts représente le groupe tosyle, et
4) réaction du dérivé tosylé de formule (IX) avec NaN₃, suivie d'une hydrogénation catalytique pour obtenir le calixarène de formule (II) avec n= 2.

Les calixarènes de formule (I) de l'invention peuvent être utilisés pour séparer au moins un métal choisi parmi les actinides et les lanthanides présents dans une solution aqueuse, notamment une solution acide telle que les solutions de dissolution et les effluents aqueux provenant d'installations de retraitement de combustibles nucléaires usés, en particulier une solution nitrique contenant 1 à 4 mol/l de HNO₃.

Pour réaliser cette séparation, on met en contact la solution aqueuse contenant le ou les métaux à séparer avec une phase immiscible comprenant au moins un calixarène répondant à la formule (I) donnée ci-dessus, pour extraire le (les) métal (métaux) dans la phase immiscible.

De préférence la solution aqueuse est une solution nitrique contenant 1 à 4 mol / l de HNO₃.

La phase immiscible est généralement constituée par une solution du ou des calixarènes de l'invention dans un solvant organique approprié.

A titre d'exemple de solvants utilisables, on peut citer les alkyl benzènes et les nitrophényl alkyl éthers.

De préférence, on utilise comme solvant un éther tel que l'ortho-nitrophényl hexyl éther.

La concentration en calixarène de la phase liquide immiscible dépend en particulier du solvant utilisé. On peut utiliser des concentrations allant de 10⁻⁴ à 5.10⁻² mol/l, par exemple une concentration de 10⁻³ mol/l.

Pour mettre en oeuvre le procédé de séparation de l'invention, on peut effectuer la mise en contact de la solution aqueuse avec cette phase liquide immiscible dans des installations classiques d'extraction liquide-liquide telles que des mélangeurs-décanteurs, des extracteurs centrifuges, des colonnes pulsées etc., mais aussi au moyen de membranes liquides supportées.

La technique des membranes liquides supportées, consiste à immobiliser la phase liquide immiscible sur un support solide tel que le polypropylène. En utilisant cette technique, on peut transférer les métaux à séparer de la solution aqueuse dans laquelle ils se trouvent, dans une solution aqueuse de réextraction. Dans ce cas, l'une des faces de la membrane est en contact avec la première solution aqueuse contenant les métaux à séparer et l'autre face est en contact avec une solution aqueuse de réextraction.

Le support de la membrane liquide supportée peut être une membrane microporeuse dont les pores sont remplis de calixarène en solution dans un solvant organique approprié. Cette membrane microporeuse peut être en polypropylène, en fluorure de polyvinylidène ou en polytétrafluoréthylène. Cette membrane peut servir de séparation entre un premier compartiment dans lequel se trouve la solution aqueuse contenant les métaux à séparer et un deuxième compartiment dans lequel se trouve la solution aqueuse de réextraction.

Pour obtenir une bonne extraction avec les membranes liquides supportées, il est avantageux d'utiliser des membranes ayant une faible épaisseur, une grande porosité et un petit diamètre de pores. Ces membranes peuvent être utilisée sous la forme de modules tels que les modules d'ultra ou de microfiltration à membranes planes ou à fibres creuses, qui permettent de traiter des débits importants de fluide.

Après extraction du ou des métaux à séparer dans la phase liquide immiscible, on peut récupérer ceux-ci par réextraction dans une solution aqueuse de réextraction. Cette solution peut être une solution aqueuse de complexant. Le complexant peut être un acide organique ou un sel d'acide organique tel que l'acide méthylène diphosphonique, l'acide oxalique, l'acide citrique, les oxalates et les citrates. L'emploi de telles solutions permet d'obtenir la réextraction des métaux séparés avec des rendements élevés.

D'autres caractéristiques et avantages de l'invention apparaîtront mieux à la lecture des exemples suivants en référence aux dessins annexés.

### Brève description des dessins.

La figure 1 est un schéma de synthèse des calixarènes de formule (I) selon le premier mode de réalisation de l'invention.

La figure 2 est un schéma de synthèse des calixarènes de formule (I) selon le second mode de réalisation de l'invention.

### Exposé détaillé des modes de réalisation.

Les exemples 1 et 2 illustrent la préparation de calixarènes répondant à la formule (I) donnée ci-dessus, avec R¹ représentant le groupe tert-butyle, R² et R³ représentant le groupe phényle (Ph), p étant égal à 4 et n étant égal à 3 (exemple 1) et à 4 (exemple 2).

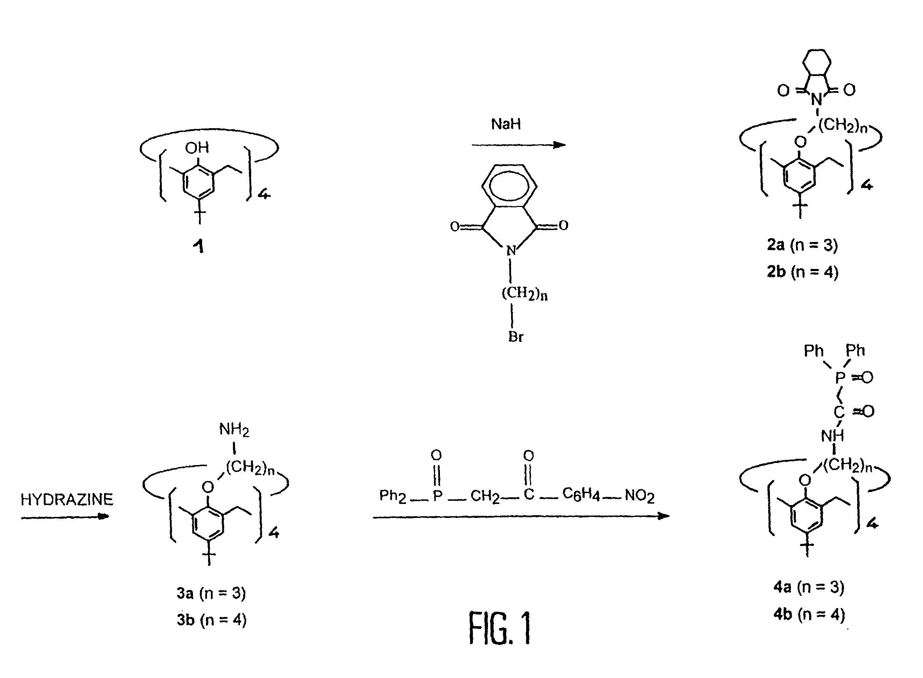

Dans ces deux exemples, on utilise le schéma de synthèse représenté sur la figure 1, qui correspond au premier mode de réalisation du procédé de l'invention.

### Exemple 1 : Préparation du tétrakis (3-diphénylphosphinoxydo acétamido propoxy)-p-tert-butyl calix[4]arène (composé 4a).

### a) Préparation du tétrakis(3-phtalimidopropoxy)-p-tert-butyl calix[4]arène (composé 2a)

On soumet à une agitation sous argon, pendant 30 minutes, une suspension de 10 g (15,44 mM) de p-tert-butyle calix[4]arène (composé **1)** dans 200 ml de diméthylformamide (DMF). On ajoute ensuite 3,12 g (123,52 mM) de NaH et 320 ml de DMF et on poursuit l'agitation pendant 1 heure. On ajoute alors 33,12 g (123,52 mM) de N-3(bromopropyl)pthalimide et on poursuit l'agitation du mélange pendant 7 jours à la température ambiante. On ajoute alors 100 ml d'eau et on collecte le précipité résultant. On dissout le précipité dans 200 ml de chloroforme, on le lave avec 50 ml de HCl à 15 % et on le sèche sur sulfate de magnésium (MgSO₄). L'évaporation du solvant suivie d'une précipitation à partir d'un mélange chloroforme-méthanol donne le produit brut. Par chromatographie sur colonne de silice dans un mélange chloroforme-méthanol (4 : 1), on obtient 11,56 g du composé **2a** sous forme de solide blanc, ce qui correspond à un rendement de 54 %.

Les caractéristiques du composés sont les suivantes :
Point de fusion : 213-215°C.
Rf = 0,44 (chloroforme : méthanol 30 : 1)
MS (FD) *m*/*z* : 1398,8 (M⁺, calc. 1397,7)
¹H NMR (200 MHz, CDCl₃ δ : 1,03 (s, 36H, t-Bu), 2,38(quin, 8H, J = 7,3 Hz, *CH*₂CH₂N), 3,10 (d, 4H, J = 12,7 Hz, Ar*CH*₂Ar), 3,86 (t, 8 H, J = 7,1 Hz, *CH*₂N), 3,97(t, 8 H, J= 7,3 Hz, O*CH*₂)*,* 4,35 (d, 4 H, J = 12,7 Hz, Ar*CH*₂Ar), 6,71 (s, 8 H, Ar) , 7,59 (m, 8 H, Ar-Pht) 7,69 (m, 8 H, Ar-Pht).

### b) Préparation du tétrakis(3-aminopropoxy)-p-tert-butyle calix[4]arène (composé 3a)

On ajoute 13, 29 ml (273 mM) d'hydrazine à une suspension de 2 g (1,43 mM) du composé **2a** dans 60 ml d'éthanol. On chauffe le mélange au reflux pendant 12 heures, on le refroidit, puis on le dilue avec 100 ml d'eau. Il se forme un précipité qui est extrait dans du dichlorométhane (4 fois 50 ml). On sèche la couche organique sur MgSO₄ et on évapore le solvant pour obtenir 1,22 g du composé **3a** (rendement de 98 %).

Les caractéristiques du composé **3a** sont les suivantes :
Point de fusion : 197-201 °C
MS(FD) : *m*/*z* : 878,8 (M⁺, calc. 877,6)
¹H NMR (200 MHz, CDCl₃ δ : 1,05 (s, 36H, t-Bu), 2,14(quin, 8H, J = 7,32, *CH*₂CH₂N), 2,27 (s large, 8 H, NH₂), 2,91 (t, 8 H, J = 7,1 Hz, *CH*₂NH₂), 3,11 (d, 4 H, J = 12,2 Hz, Ar*CH*₂Ar), 3,89(t, 8H, J= 7,1 Hz, O*CH*₂), 4,33 (d, 4 H, J = 12,2 Hz, Ar*CH*₂Ar), 6,75 (s, 8 H, Ar).

### c) Préparation du tétrakis(3-diphénylphosphinoxydo-acétamidopropoxy)-p-tert-butyl calix[4]arène (composé 4a)

2,18 (5,72mM) de p-nitrophényl(diphénylphosphoryl)acétate et 1,0 g (1,14 mM) du composé **3a** sont chauffés à 50°C dans 40 ml de toluène, pendant 18 heures. On évapore alors le solvant et on reprend le résidu dans du chloroforme. On lave la solution de façon répétée avec Na₂CO₃ à 5 %, on sèche sur MgSO₄, et on élimine le solvant sous vide. La recristallisation à partir d'un mélange chloroforme-hexane donne 1,59 g du composé **4a** sous forme de solide blanc (rendement de 75 %).

Les caractéristiques du composé **4a** sont les suivantes :
Point de fusion : 244-246°C
Rf = 0,40 (chloroforme-méthanol 9 : 1)
MS(FD) : *m*/*z* : 1848,4 (M⁺, calc. 1845,8)
¹H NMR (200 MHz), CDCl₃ δ : 1,04 (s, 36H, t-Bu), 1,99(m large, 8 H, *CH*₂CH₂N), 3,00 (d, 4 H, J = 12,2 Hz, Ar*CH*₂Ar), 3,27(m large, 8 H, *CH*₂N), 3,48 (d, 8 H, J = 14,1 Hz, POCH₂CO), 3,65 (t large, 8 H, O*CH*₂), 4,14(d, 4 H, J = 12,7 Hz Ar*CH*₂Ar), 6,71 (s, 8 H, Ar), 7,31-7,78 (m, 40 H, P-Ar), 8,27 (m large, 4 H NH).

### Exemple 2 : Préparation du tétrakis (4-diphénylphosphinoxydo acétamido butoxy)-p-tert-butylcalix[4]arene (composé 4b)

### a) Préparation du tétrakis(4-(pthalimidobutoxy)-p-tert butyle calix[4]arène (composé 2b)

On soumet à une agitation, sous argon, pendant 30 minutes, une suspension de 2,5 g (3,86 mM) de p-tert butyl calix[4]arène (composé **1**) dans 50 ml de DMF. On ajoute 780 mg (30,88 mM) de NaH et 50 ml DMF et poursuit l'agitation pendant 1 heure. On ajoute alors 33,12 g (123,52 mM) de N-4(bromobutyl)pthalimide et on agite le mélange pendant 5 jours à la température ambiante. On ajoute 50 ml d'eau et on collecte le précipité résultant. On dissout le précipité dans 200 ml de chloroforme, on le lave avec 50 ml de HCl à 15 % et avec de la saumure, et on le sèche sur MgSO₄. L'évaporation du solvant, suivie d'une précipitation à partir de chloroforme-méthanol donne le produit brut. Par chromatographie sur colonne de silice dans le chloroforme, on obtient 2,32 g du composé **2b** sous forme de solide blanc (rendement de 42 %).

Les caractéristiques du composé **2b** sont les suivantes :
Point de fusion : 138-141°C
Rf = 0,45 (chloroforme-méthanol 30 : 1)
MS(FD) : *m*/*z* : 1453,8 (M⁺, calc. 1453,7)
¹H NMR (200 MHZ), CDCl₃ δ : 1,05 (s, 36 H, t-Bu), 1,75 (m large, 8 H, *CH*₂CH₂NH₂), 2,08 (m large, 8 H, OCH₂*CH*₂CH₂), 3,08 (d, 4 H, J=12,7 Hz, Ar*CH*₂Ar), 3,75(t, 8 H, J = 7,3 Hz, *CH*₂N), 3,90 (t, 8 H, J = 7,6 Hz, O*CH*₂), 4,34 (d, 4 H, J = 12,2 Hz, Ar*CH*_{*2*}Ar), 6,73(s, 8 H, Ar), 7,61 (m, 8 H, Ar-Pht), 7,70 (m, 8 H, Ar-Pht).

### b) Préparation du tétrakis 4-(aminobutoxy)-p-tert butyl calix[4]arène (composé 3b).

On ajoute 6,5 ml (133,9 mM) d'hydrazine à une suspension de 1,0 g (0,68 mM) du composé **2b** dans 30 ml d'éthanol. On chauffe le mélange au reflux pendant 12 heures, on le refroidit, puis on le dilue avec 100 ml d'eau. On élimine l'éthanol sous vide et on extrait la suspension résultante avec du chloroforme (4 x 100 ml). On sèche la couche organique sur MgSO₄ et on évapore le solvant pour obtenir 458 mg du composé **3b** sous forme de solide jaune pâle (rendement de 87 %).

Les caractéristiques du composé **3b** sont les suivantes :
Point de fusion : 195-200°C
MS(FD) : *m*/*z* : 934,2 (M⁺, calc. 933,7)
¹H NMR (200 MHz, CDCl₃ δ : 1,05 (s, 36 H, t-Bu), 1,58(m large, 8 H, *CH*₂CH₂NH₂), 1,98 (m large, 8 H, OCH₂*CH*₂CH₂), 2,54 (s large, 8 H, NH₂), 2,80(t, 8 H, J = 7,1 Hz, *CH*₂NH₂), 3,10 (d, 4 H, J = 12,7 Hz, Ar*CH*₂Ar), 3,85(t, 8 H, J = 7,6 Hz, O*CH*₂), 4,34 (d, 4 H, J = 12,7 Hz, Ar*CH*₂Ar), 6,72 (s, 8 H, Ar).

### c) Préparation du composé 4b

On chauffe à 50°C dans 20 ml de toluène, pendant 18 heures, 1,03g (2,7 mM) de p-nitrophényl(diphénylphosphoryl)acétate et 500 mg (0,54 mM) du composé **3b.** On évapore alors le solvant et on reprend le résidu dans du chloroforme. On lave la solution de façon répétée avec Na₂CO₃ à 5 %, on sèche sur MgSO₄ et on élimine le solvant sous vide. La précipitation à partir de chloroforme-éther diéthylique donne 801 mg du composé **4b** sous forme de solide blanc légèrement teinté (rendement de 78 %).

Les caractéristiques du composé **4b** sont les suivantes :
Point de fusion : 232-236°C
Rf = 0,29 (chloroforme : méthanol 9 : 1)
MS(FD) *m*/*z* : 1902,0 (M⁺, calc. 1901,9)
¹H NMR (200 MHz), CDCl₃ δ ; 1,05 (s, 36 H, t-Bu), 1,41(m large, 8 H, *CH*₂CH₂NH₂), 1,82 (m large, 8 H, OCH₂*CH*₂CH₂), 3,07 (d, 4 H, J = 12,7 Hz, Ar*CH*₂Ar), 3,15(br, 8 H, *CH*₂NH), 3,56 (d, 8 H, J = 14,2 Hz, PO*CH*_{*2*}CO*)*, 3,85 (t large, 8 H, O*CH*₂)*,* 4,23 (d, 4 H, J = 12,2 Hz, Ar*CH*_{*2*}Ar), 6,73(s, 8 H, Ar) , 7,38-7,84 (m, 40 H, P-Ar), 8,28 (s large, 4 H, NH).

### Exemple 3 : Préparation du tétrakis (2-diphénylphosphinoxydo acétamido étoxy)-p-tert-butylcalix[4]arène (composé 10).

Ce composé répond à la formule (I) dans laquelle R¹ est le groupe tert-butyl, p = 4, n = 2, et R³ et R⁴ représentent le groupe phényle.

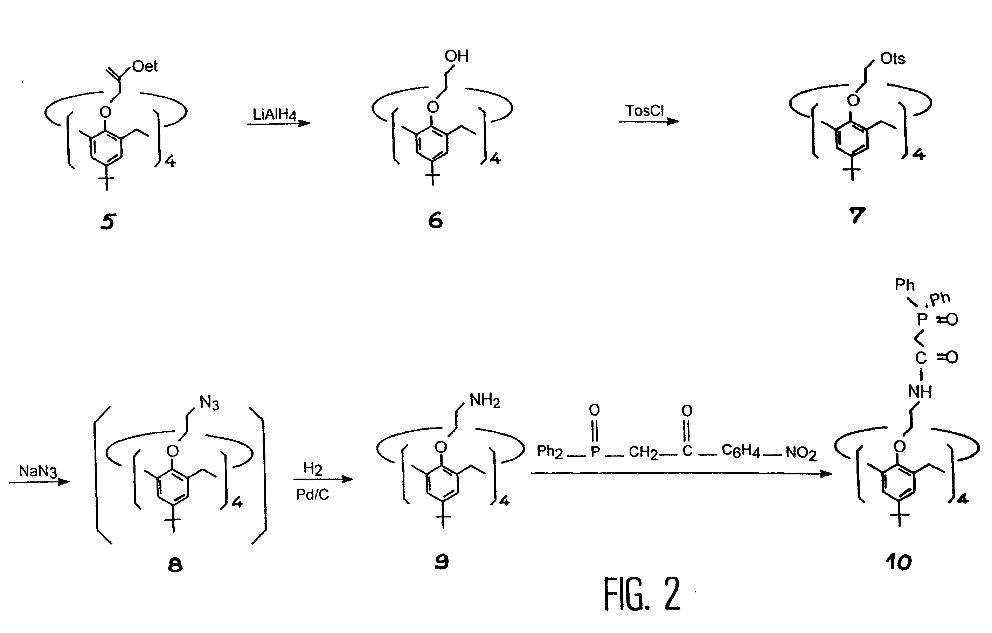

Pour cette préparation, on suit le schéma de synthèse donné sur la figure 2.

### a) Préparation de tétraéthyl-p-tert-butyl calix[4]arène tétra-acétate (composé 5).

On chauffe au reflux pendant 1 heure, dans 250 ml d'acétonitrile, 8 g (12,35 mM) de p-tert-butyl calix[4]arène (composé **1**) et 5 g (36,23 mM) de K₂CO₃. On ajoute 20 ml (180 mM) de bromoacétate d'éthyle et on porte le mélange au reflux pendant 48 heures. On évapore le solvant et on reprend le résidu dans un mélange de 100 ml d'eau et de 100 ml de chloroforme. On sépare la couche organique et on la lave avec trois fois 50 ml d'eau. On sèche la solution et on la concentre sous vide. L'addition de méthanol et le stockage au réfrigérateur donne 10,12 g du composé **5** sous forme de cristaux blancs (rendement de 82 %).

Les caractéristiques du composé **5** sont les suivantes :
Point de fusion : 128-131°C
Rf = 0,27 (chloroforme : méthanol 9 : 1)
MS(FD) *m*/*z* : 992,8 (M⁺, calc. 993,6)
¹H NMR (200 MHz, CDCl₃ δ : 1,05 (s, 36 H, t-Bu), 1,26(t, 12 H, J = 7,1 Hz, CH₂CH₃) , 3,17 (d, 4 H, J = 12, 7 Hz Ar*CH*_{*2*}Ar) , 4,18 (quart, 8 H, J = 7,3 *CH*₂CH₃), 4,78 (s large, 8 H, OCH₂) 4,83(d, 4 H, J = 13,2 Hz, Ar*CH*₂Ar), 6,75 (s, 8 H, Ar).

### b) Préparation du tétrakis(2-hydroxyéthoxy)-p-tert-butyl calix[4]arène (composé 6)

On ajoute goutte à goutte 8 g (8,05 mM) du composé **5** dans 50 ml d'éther diéthylique à une suspension refroidie de 2,44 g (64,38 mM) de LiAlH₄ dans 50 ml d'éther diéthylique, sous argon. On laisse la suspension résultante se réchauffer à la température ambiante et on l'agite pendant 3 jours. On refroidit la suspension et on ajoute lentement du HCl 1N jusqu'à ce que le solide soit dissous. La couche aqueuse est alors extraite avec un mélange d'éther diéthylique et de dichlorométhane (1 : 1). On lave alors la couche organique avec de l'eau et on filtre. L'évaporation du solvant et la précipitation à partir d'un mélange dichlorométhane-méthanol donne 5,72 g du composé **6** sous forme de solide blanc duveteux (rendement de 86 %).

Les caractéristiques du composé **6** sont les suivantes :
Point de fusion : 249-296°C
Rf = 0,55 (chloroforme : méthanol 9 : 1)
MS(FD) *m*/*z* : 824,9 (M⁺, calc. 825,5)
¹H NMR (200 MHz), CDCl₃ δ : 1,07 (s, 36 H, t-Bu), 3,20 (d, 4 H, J= 12,7 Hz Ar*CH*₂Ar), 3,67 (s large, 4 H, OH), 3,98 (s large, 16 H, *CH*₂*CH*₂), 4,33 (d, 4 H, J = 12,7 Hz, Ar*CH*₂Ar), 6,83 (s, 8 H, Ar).

### c) Préparation du tétrakis[(4-méthylphényl) sulfonyloxyéthoxy]-p-tert-butyl calix[4]arène (composé 7)

On ajoute 13,98 g (73,3 mM) de chlorure de p-toluènesulfonyle (TosCl à une solution de 5 g (6,07 mM) du composé **6,** à 0°C. On stocke la solution résultante à 4°C pendant 4 jours, puis on la verse dans 1250 ml de HCl 2N glacé. On collecte le précipité huileux et on le dissout dans du diclhorométhane. On lave la solution avec HCl 2N et de la saumure. La trituration avec de l'hexane chaud suivie d'une chromatographie (chloroforme-méthanol 20 : 1) donne 5,53 g du composé **7** sous forme de solide blanc (rendement de 63 %).

Les caractéristiques du composé **7** sont les suivantes :
Point de fusion : 146-149°C
Rf = 0,66 (chloroforme : méthanol 30 : 1)
¹H NMR (200 MHz), CDCl₃ δ : 1,03 (s, 36 H, t-Bu), 2,41 (s, 12 H, SO₃Ar*CH*₃) 2,97 (d, 4 H, J= 13,2 Hz, Ar*CH*₂Ar), 4,07 (s large, 8 H, ArOCH₂*CH*₂), 4,20 (d, 4 H, J = 12,7 Hz, Ar*CH*_{*2*}Ar), 4,37 (s large, 8 H, ArO*CH*_{*2*}), 6,67 (s, 8 H, Ar), 7,31 (d, 8 H, J = 7,8 Hz, ArSO₃), 7,78 (d, 8 H, J = 8,3 Hz, ArSO₃).

### d) Préparation du tétrakis(2-aminoéthoxy)-p-tert-butyl calix[4]arène (composé 9)

On ajoute 405 mg (6,21 mM) de NaN₃ à une solution de 1,5 g(1,035 mM) du composé **7** dans 20 ml de DMF. On agite la solution à 60°C, sous argon, pendant 4 heures. On refroidit la solution et on la dilue avec 200 ml d'eau. On extrait la suspension résultante avec 4 x 75 ml d'éther diéthylique. On lave les couches organiques combinées avec de l'eau, on les sèche sur MgSO₄ et on élimine le solvant sous vide.

On ajoute une quantité catalytique de Pd/C à l'huile résultante (composé **8**) dans une mélange dioxane-éthanol (1 : 1). On introduit de l'hydrogène gazeux et on agite le mélange pendant 48 heures. On filtre le mélange sur un lit de celite® et on évapore le solvant pour obtenir l'amine brute **9** sous forme de mousse vert pâle. On utilise ce produit sans purification supplémentaire.

les caractéristiques du composé **9** sont les suivantes :
MS(FD) : *m*/*z* : 821,7 (M⁺, calc. 821,6)
¹H NMR (200 MHz), CDCl₃ δ : 1,43 (s, 36 H, t-Bu), 1,95 (d, 4 H, J= 13,2 Hz, Ar*CH*_{*2*}Ar), 2,60 (m large, 16 H, MH₂ + *CH*₂NH₂), 2,81 (s large, 8 H, O*CH*₂), 3,26 (d, 4 H, J = 12,7 Hz, Ar*CH*₂Ar), 5,59 (s, 8 H, Ar).

### e) Préparation du composé 10.

On chauffe 500 mg (0,61 mM) du composé **9** brut et 1,164 g (3,05 mM) de p-nitrophényl(diphénylphosphoryl)acétate dans 20 ml de toluène contenant 2 ml de triéthylamaine, à 50°C, pendant 18 heures. On évapore les solvants et on reprend le résidu dans du chloroforme. On lave la couche organique de façon répétée avec Na₂CO₃, on sèche sur MgSO₄ et on élimine le solvant sous vide. Le produit brut est chromatographié sur colonne de silice dans du chloroforme-méthanol (20 : 1), ce qui donne 700 mg du composé **9** sous forme de composé vitreux brun pâle (rendement de 43 % à partir du composé **7**).

Les caractéristiques du composé **10** sont les suivantes :
Rf = 0,32 (chloroforme : méthanol 9 : 1)
¹H NMR (200 MHz), CDCl₃ + DMSO-d₆ δ : 0,90 (s large, 36 H, t-Bu), 2,82 (d, 4 H, J = 12,7 Hz, Ar*CH*₂Ar), 3,30 (d, 8 H, J= 13,2 Hz, PO*CH*₂CO), 3,49 (m large, 8 H, NH*CH*₂), 3,69 (m large, 8H, O*CH*_{*2*}), 3,92 (d, 4 H, J = 12,7 Hz, Ar*CH*₂Ar), 6,54 (s large, 8 H, Ar), 7,12-7,64 (m, 40 H, P-Ar), 8,27 (s large, 4 H, NH).

### Exemple 4

Dans cet exemple, on évalue l'efficacité du calixarène de l'exemple 3 (composé **10**) pour séparer le lanthane, le cérium, le néodyme, le samarium, l'europium, l'américium et le curium, à partir de solutions aqueuses contenant l'un de ces éléments, l'acidité nitrique des solutions variant de 10⁻² mol/l à 4 mol/l.

Dans cet exemple, on met en contact 3 ml de chaque solution aqueuse contenant environ 10⁻⁵ mol/l de l'élément à séparer avec 3 ml d'une solution organique constituée par du nitrophénylhexyl éther (NPHE) contenant 10⁻³ mol/l du composé **10.** On effectue la mise en contact dans un tube en polypropylène de 20 ml que l'on soumet à une agitation. Après une 1 heure de mise en contact, on laisse décanter les deux phases et on compte l'activité de chaque phase par scintillation liquide ou par spectrométrie α ou γ.

On détermine alors le coefficient de distribution D qui correspond au rapport de l'activité de l'élément dans la phase organique sur l'activité du même élément dans la phase aqueuse.

Les résultats obtenus sont donnés dans le tableau 1.

Ces résultats montrent que les coefficients de distribution augmentent avec l'acidité de la solution aqueuse.

### Exemple 5

Dans cet exemple, on suit le même mode opératoire que dans l'exemple 4 pour tester l'efficacité du composé **4a** pour la séparation des mêmes éléments. Les résultats obtenus sont donnés dans le tableau 2 joint.

Comme dans le cas du composé **10,** les coefficients de distribution augmentent avec l'acidité de la solution aqueuse de départ. Par ailleurs, les coefficients de distribution sont plus élevés que dans le cas du composé **10** qui comporte une chaîne hydrocarbonée plus courte entre le groupe phosphinoxydo-acétamido et le cycle phényle du calixarène.

### Exemple 6

Dans cet exemple, on suit le même mode opératoire que dans l'exemple 4 pour tester l'efficacité du composé **4b** pour la séparation des même éléments à partir de solutions nitriques. Les résultats obtenus sont donnés dans le tableau 3.

Ces résultats montrent que les coefficients de distribution augmentent toujours avec l'acidité de la solution aqueuse, mais qu'ils sont beaucoup plus élevés lorsque la chaîne hydrocarbonée comporte 4 atomes de carbone.

On remarquera en particulier que les calixarènes 4a et 4b ont des coefficients de distribution élevés pour Am et Cm.

### Exemple comparatif

Dans cet exemple, on suit le même mode opératoire que dans l'exemple 4, mais on utilise comme phase liquide le CMPO à une concentration de 0,25 mol/l dans du nitrophényl hexyl éther pour effectuer la séparation des mêmes éléments. La formule du CMPO est la suivante :

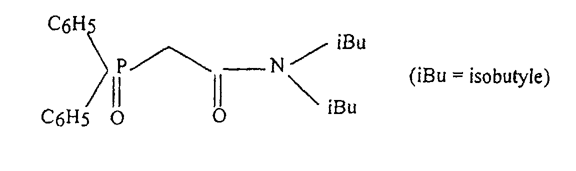

Les résultats obtenus sont donnés dans le tableau 4.

Si l'on compare les résultats du tableau 4 à ceux du tableau 3 concernant le calixarène **4b**, on remarque que l'emploi de CMPO exige des concentrations beaucoup plus importantes (0,25 mol/l au lieu de 10⁻³ mol/l) pour obtenir des résultats du même ordre de grandeur.

Les calixarènes de l'invention sont donc beaucoup plus intéressants.

### Référence citée

[1] : WO-A-96/23800.

**Tableau 1**

| **COEFFICIENTS DE DISTRIBUTION** **Composé 10/(10**^{**-3**} **M) dans NPHE** | | | | | | | |
|---|---|---|---|---|---|---|---|
| HNO₃ | 10⁻² M | 10⁻¹ M | 1M | 1,5M | 2M | 3M | 4M |
| La | 0,18 | 0,27 | 1,85 | 2,40 | 2,60 | 3,10 | 4,00 |
| Ce | 0,28 | 0,31 | 2,00 | 2,65 | 2,90 | 3,65 | 5,05 |
| Nd | 0,28 | 0,17 | 1,25 | 1,65 | 1,90 | 2,70 | 3,95 |
| Sm | 0,39 | 0,14 | 1,00 | 1,30 | 1,55 | 2,10 | 3,50 |
| Eu | 0,29 | 0,07 | 0,72 | 1,00 | 1,15 | 1,70 | 2,95 |
| Am | 0,60 | 0,30 | 1,80 | 2,15 | 2,65 | 3,75 | 5,65 |
| Cm | 2,5 | 0,50 | 1,85 | 2,10 | 2,35 | 3,00 | 4,50 |

**Tableau 2**

| **COEFFICIENTS DE DISTRIBUTION** **Composé 4a (10**^{**-3**} **M) dans NPHE** | | | | | | | |
|---|---|---|---|---|---|---|---|
| HNO₃ | 10⁻² M | 10⁻¹ M | 1M | 1,5M | 2M | 3M | 4M |
| La | 0,08 | 0,41 | 2,90 | 2,95 | 2,85 | 2,95 | 3,10 |
| Ce | 0,10 | 0,57 | 3,95 | 4,20 | 4,20 | 4,50 | 4,70 |
| Nd | 0,09 | 0,49 | 3,25 | 3,60 | 3,70 | 4,30 | 4,70 |
| Sm | 0,11 | 0,50 | 3,35 | 3,75 | 4,15 | 5,00 | 5,95 |
| Eu | 0,10 | 0,39 | 2,80 | 3,20 | 3,55 | 4,45 | 5,50 |
| Am | 0,09 | 0,72 | 4,55 | 4,40 | 4,90 | 5,85 | 6,85 |
| Cm | 0,50 | 1,25 | 4,80 | 4,80 | 5,90 | 6,95 | 8,50 |

**Tableau 3**

| **COEFFICIENTS DE DISTRIBUTION** **Composé 4b (10**^{**-3**} **M) dans NPHE** | | | | | | |
|---|---|---|---|---|---|---|
| HNO₃ | 10⁻¹ M | 1M | 1,5M | 2M | 3M | 4M |
| La | 1,57 | 35,7 | 35,6 | 34,9 | 29,9 | 34,6 |
| Ce | 1,95 | 16,4 | 15,3 | 14,9 | 13,9 | 15,4 |
| Nd | 1,62 | 34,8 | 36,4 | 37,0 | 37,5 | 45,6 |
| Sm | 1,63 | 35,9 | 37,5 | 39,9 | 52,5 | 55,7 |
| Eu | 1,28 | 29,02 | 31,2 | 33,6 | 46,6 | 51,9 |
| Am | 2,35 | 47,9 | 47,4 | 51,0 | 61,2 | 63,9 |
| Cm | 8,8 | 43,5 | 51,0 | 34,0 | 43,5 | 53,7 |

**Tableau 4**

| **COEFFICIENTS DE DISTRIBUTION** **CMPO (0,25M) dans NPHE** | | | | | | | |
|---|---|---|---|---|---|---|---|
| HNO₃ | 10⁻² M | 10⁻¹ M | 1M | 1,5M | 2M | 3M | 4M |
| La | 0,92 | 12,9 | 67 | 62 | 70 | 51 | 38 |
| Ce | 1,6 | 21 | 14 | 12,5 | 13 | 12,5 | 11,5 |
| Nd | 1,7 | 23 | 125 | 115 | 135 | 100 | 75 |
| Sm | 1,6 | 21 | 140 | 130 | 160 | 110 | 90 |
| Eu | 1,2 | 16 | 110 | 105 | 125 | 90 | 75 |
| Am | 2,5 | 35 | 200 | 155 | 195 | 150 | 105 |
| Cm | 1,7 | 26 | 90 | 95 | 52 | 50 | 68 |

## Revendications

1. Calixarène de formule : 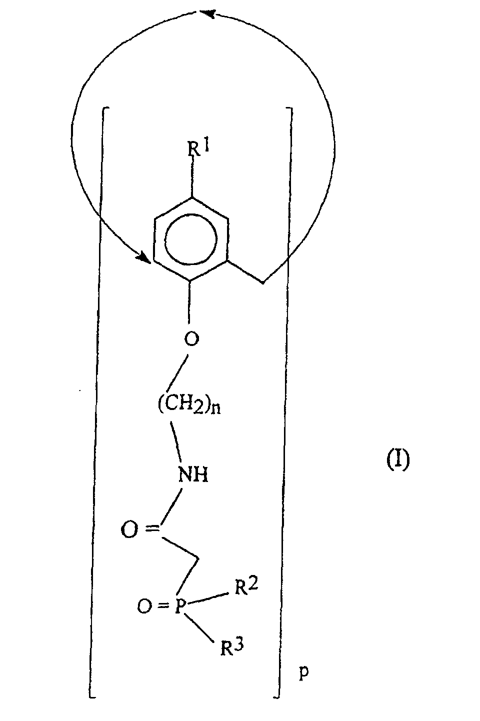 dans laquelle :
- R¹ est un groupe alkyle ou aryle, ou un atome d'hydrogène,
- R² et R³ qui peuvent être identiques ou différents, sont des groupes alkyle ou aryle,
- n est un nombre entier allant de 2 à 8, et
- p est un nombre entier allant de 4 à 8.

2. Calixarène selon la revendication 1, dans lequel p est égal à 4.

3. Calixarène selon la revendication 1 ou 2, dans lequel R¹ représente le groupe tert-butyle.

4. Calixarène selon l'une quelconque des revendications 1 à 3, dans lequel R² et R³ représentent le groupe phényle.

5. Calixarène selon l'une quelconque des revendications 1 à 4, dans lequel n est un nombre entier de 2 à 5.

6. Calixarène selon la revendication 1, dans lequel :
- R¹ représente le groupe tert-butyle,
- R² et R³ représentent le groupe phényle,
- n est égal à 2, 3 ou 4, et
- p est égal à 4.

7. Procédé de préparation d'un calixarène de formule : 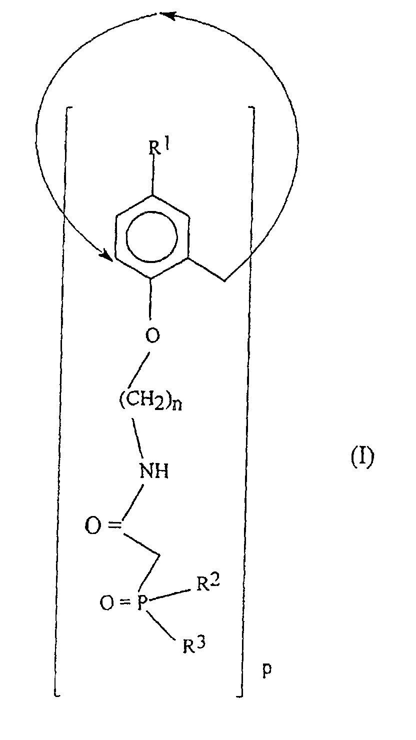 dans laquelle :
- R¹ est un groupe alkyle ou aryle, ou un atome d'hydrogène,
- R² et R³ qui peuvent être identiques ou différents, sont des groupes alkyle ou aryle,
- n est un nombre entier allant de 2 à 8, et
- p est un nombre entier allant de 4 à 8,
qui consiste à faire réagir un dérivé aminoalcoxy calixarène de formule : 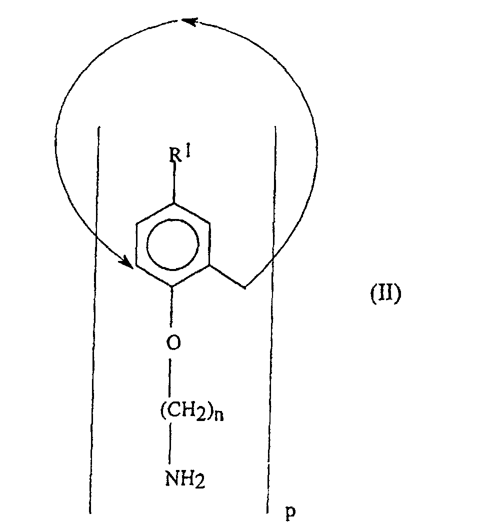 dans laquelle R¹, n et p sont tels que définis ci-dessus, avec un phosphinoxydo-acétate de formule : 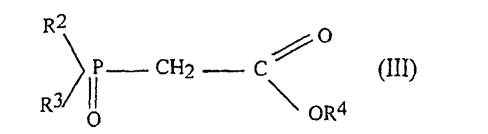 dans laquelle :
R² et R³ sont tels que définis ci-dessus et R⁴ représente le groupe p-nitrophényle ou 2,4-dinitrophényle.

8. Procédé selon la revendication 7, dans lequel le dérivé aminoalcoxy calixarène de formule (II) avec n supérieur à 2, est préparé par un procédé comprenant les étapes suivantes :
1) réaction d'un calixarène de formule : 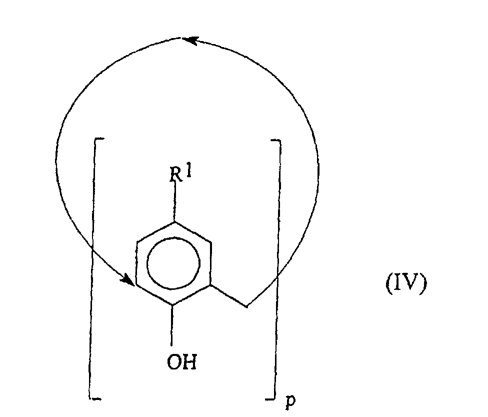 avec R¹ et p ayant la signification donnée dans la revendication 7 avec un N-3(bromoalkyl)phtalimide de formule : 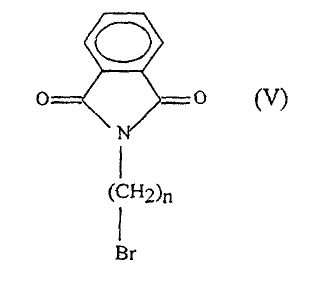 avec n ayant la signification donnée dans la revendication 7, pour obtenir un (3-phtalimidoalcoxy)calixarène de formule : 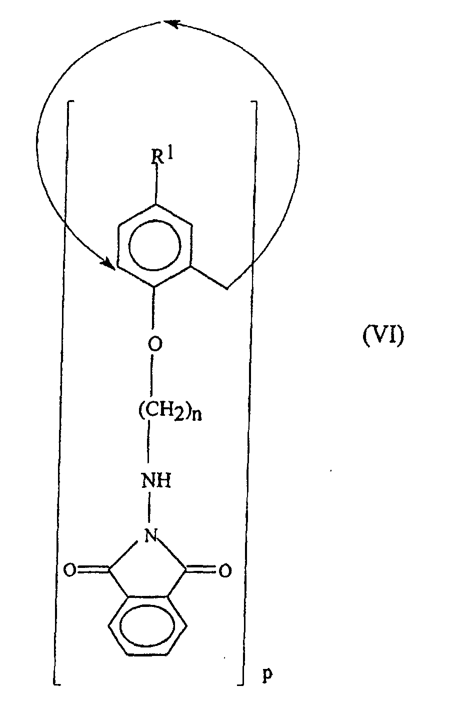 et
2) réaction du composé de formule (VI) avec l'hydrazine.

9. Procédé selon la revendication 7, dans lequel on prépare le dérivé aminoalcoxy calixarène de formule (II) avec n = 2 par un procédé comprenant les étapes suivantes :
1) réaction d'un calixarène de formule : 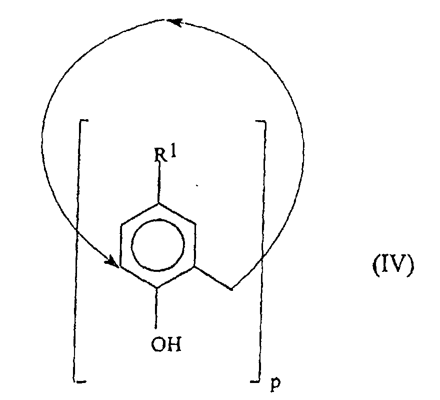 dans laquelle :
R¹ et p ont la signification donnée dans la revendication 7, avec un bromoacétate d'alkyle, pour obtenir le dérivé de calixarène de formule : 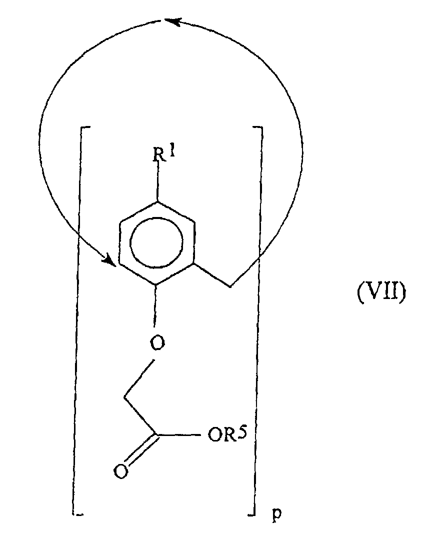
avec R¹ ayant la signification donnée dans la revendication 7 et R⁵ représentant un groupe alkyle,
2) réduction du dérivé de calixarène de formule (VII) pour obtenir le dérivé hydroxylé de formule : 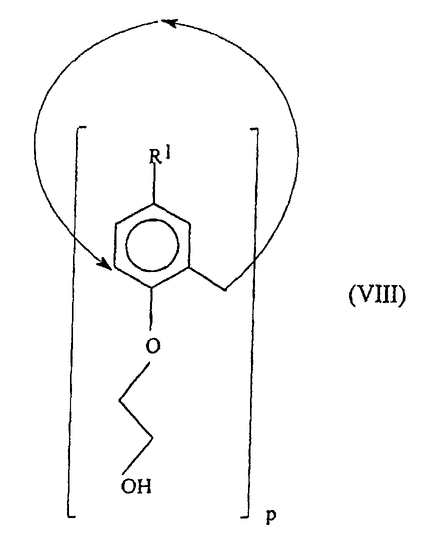
3) réaction du dérivé hydroxylé de formule (VIII) avec le chlorure de tosyle pour obtenir le dérivé tosylé de formule : 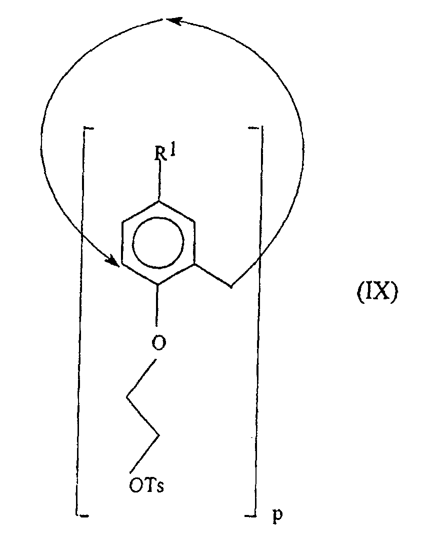 dans laquelle Ts représente le groupe tosyle, et
4) réaction du dérivé tosylé de formule (IX) avec NaN₃, suivie d'une hydrogénation catalytique pour obtenir le calixarène de formule (II) avec n = 2.

10. Procédé pour séparer au moins un métal choisi parmi les lanthanides et les actinides présents dans une solution aqueuse, qui consiste à mettre en contact la solution aqueuse avec une phase immiscible comprenant au moins un calixarène de formule : 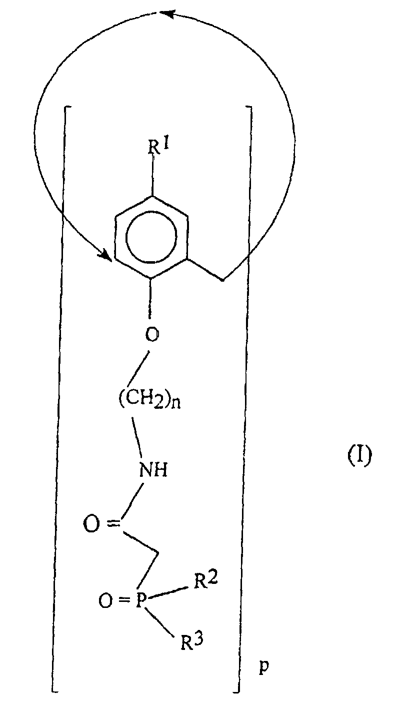 dans laquelle :
- R¹ est un groupe alkyle ou aryle, ou un atome d'hydrogène,
- R² et R³ qui peuvent être identiques ou différents, sont des groupes alkyle ou aryle,
- n est un nombre entier allant de 2 à 8, et
- p est un nombre entier allant de 4 à 8,
pour extraire le (les) métal (métaux) dans la phase immiscible.

11. Procédé selon la revendication 10, dans lequel la solution aqueuse est une solution nitrique contenant 1 à 4 mol/l de HNO₃.

12. Procédé selon la revendication 10 ou 11, dans lequel la phase immiscible est une solution du (des) calixarène(s) de formule (I) dans un solvant organique.

13. Procédé selon la revendication 12, dans lequel le solvant organique est un nitrophényl alkyl éther.

## Claims

1. Calixarene according to the formula: 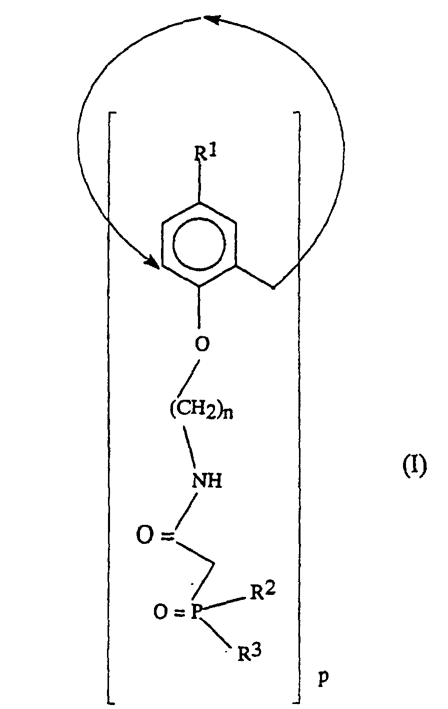 wherein:
- R¹ is an alkyl or aryl group, or a hydrogen atom,
- R² and R³ which may be identical or different, are alkyl or aryl groups,
- n is an integer ranging from 2 to 8, and
- p is an integer ranging from 4 to 8.

2. Calixarene according to claim 1, wherein p is equal to 4.

3. Calixarene according to claim 1 or 2, wherein R¹ represents the tert-butyl group.

4. Calixarene according to any of claims 1 to 3, wherein R² and R³ represent the phenyl group.

5. Calixarene according to any of claims 1 to 4, wherein n is an integer from 2 to 5.

6. Calixarene according to claim 1, wherein:
- R¹ represents the tert-butyl group,
- R² and R³ represent the phenyl group,
- n is equal to 2, 3 or 4, and
- p is equal to 4.

7. Method to prepare a calixarene according to the formula: 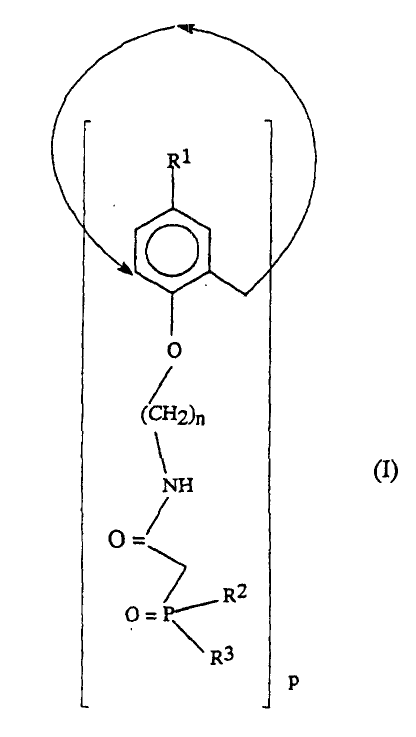 wherein:
- R¹ is an alkyl or aryl group, or a hydrogen atom,
- R² and R³, which may be identical or different, are alkyl or aryl groups,
- n is an integer ranging from 2 to 8, and
- p is a number ranging from 4 to 8,
which consists of reacting an aminoalcoxy calixarene derivative according to the formula: 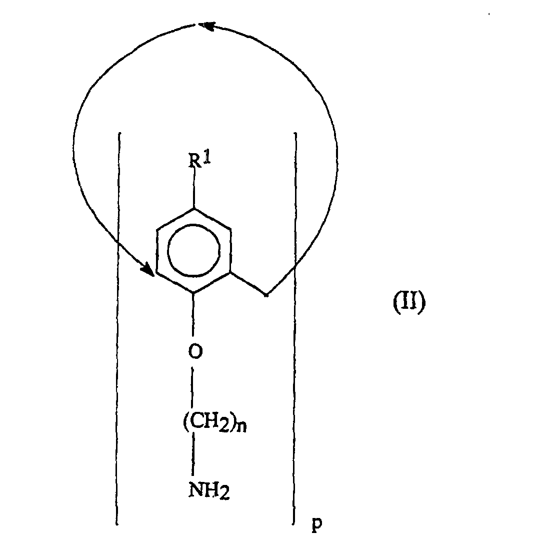 wherein R¹, n and p are as defined above, with a phosphinoxide-acetate according to the formula: 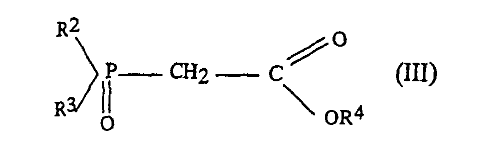 wherein:
R² and R³ are as defined above and R⁴ represents the p-nitrophenyl or 2,4-dinitrophenyl group.

8. Method according to claim 7, wherein the aminoalcoxy calixarene according to formula (II) wherein n is greater than 2, is prepared using a method comprising the following steps:
1) reaction of a calixarene according to the formula: 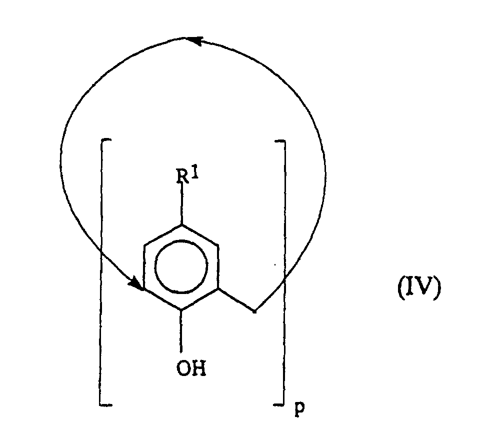 where R¹ and p have the correspondence given in claim 7 with an N-3(bromoalkyl)phthalimide according to the formula: 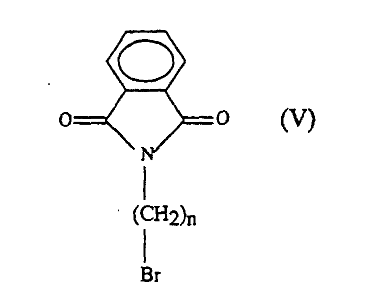 where n has the correspondence given in claim 7, to obtain a (3-phthalimido-alcoxy)calixarene according to the formula: 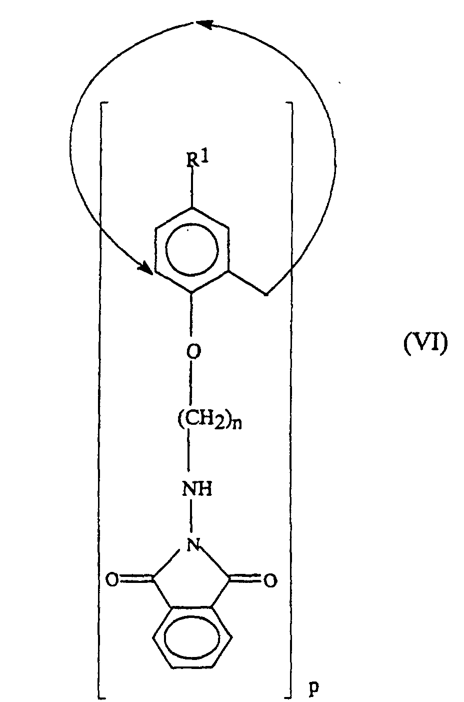 and
2) reaction of the compound according to formula (VI) with hydrazine.

9. Method according to claim 7, wherein the aminoalcoxy calixarene derivative according to formula (II) wherein n = 2 is prepared using a method comprising the following steps:
1) reaction of a calixarene according to the formula: 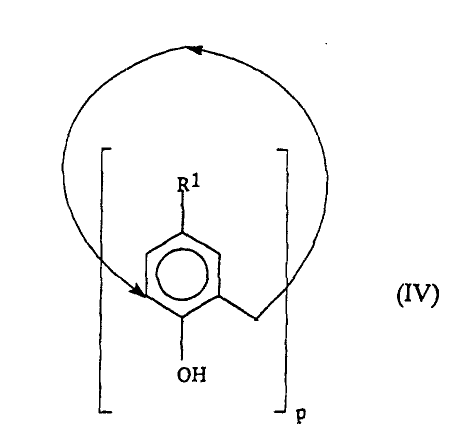 wherein:
R¹ and p have the correspondence given in claim 7, with an alkyl bromoacetate, to obtain the calixarene derivative according to the formula: 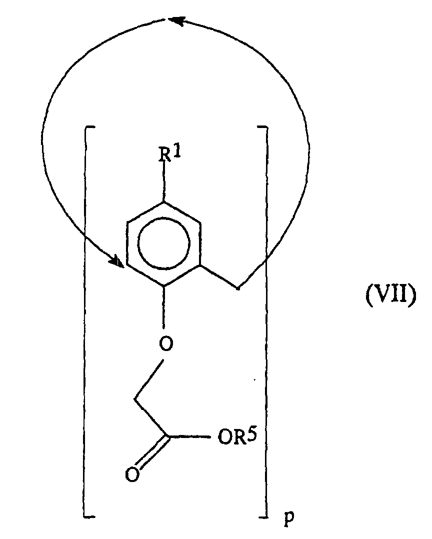
where R¹ has the correspondence given in claim 7 and R⁵ represents an alkyl group,
2) reduction of the calixarene derivative according to formula (VII) to obtain the hydroxylated derivative according to the formula: 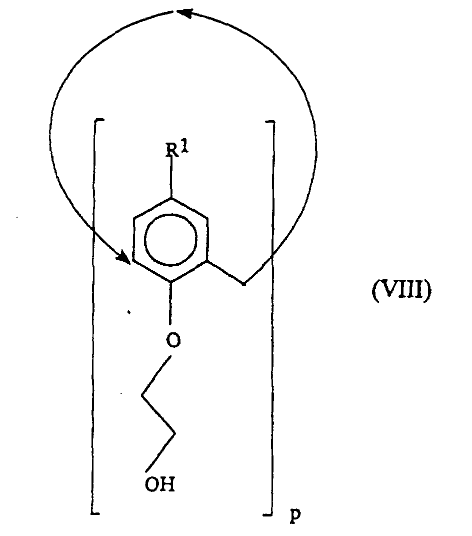
3) reaction of the hydroxylated derivative according to formula (VIII) with tosyl chloride to obtain the tosylated derivative according to the formula: 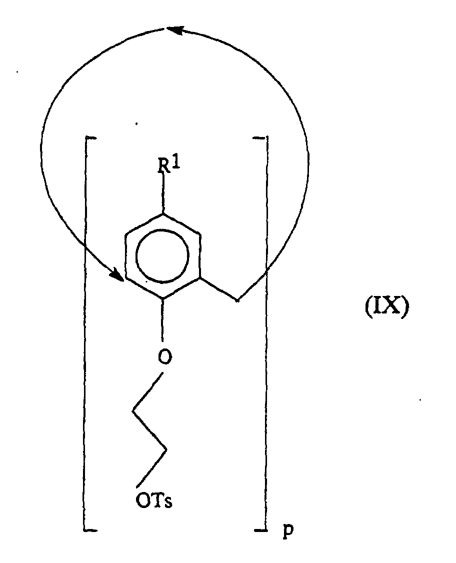 wherein Ts represents the tosyl group, and
4) reaction of the tosylated derivative according to formula (IX) with NaN₃, followed by a catalytic hydrogenation to obtain the calixarene according to formula (II) where n = 2.

10. Method to separate at least one metal selected from actinides and lanthanides present in an aqueous solution, consisting of placing the aqueous solution in contact with a non-miscible phase comprising at least one calixarene complying with the formula: 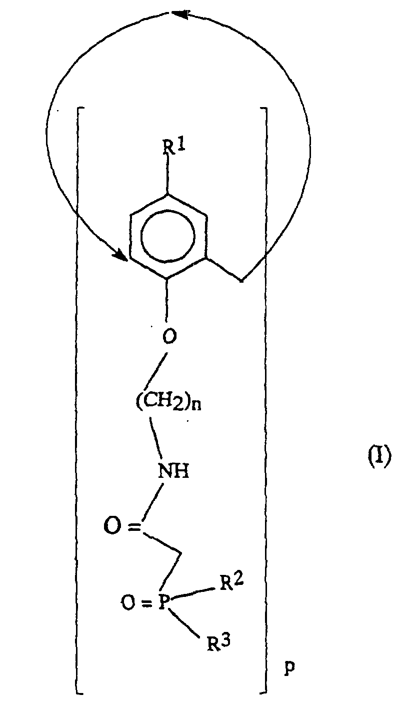 wherein:
- R¹ is an alkyl or aryl group, or a hydrogen atom,
- R² and R³, which may be identical or different, are alkyl or aryl groups,
- n is an integer ranging from 2 to 8, and
- p is an integer ranging from 4 to 8,
to extract the metal(s) in the non-miscible phase.

11. Method according to claim 10, wherein the aqueous solution is a nitric solution containing 1 to 4 mol/l of HNO₃.

12. Method according to claim 10 or 11, wherein the non-miscible phase is a solution of the calixarene(s) according to formula (I) in an organic solvent.

13. Method according to claim 12, wherein the organic solvent is a nitrophenyl alkyl ether.

## Patentansprüche

1. Calixaren der Formel 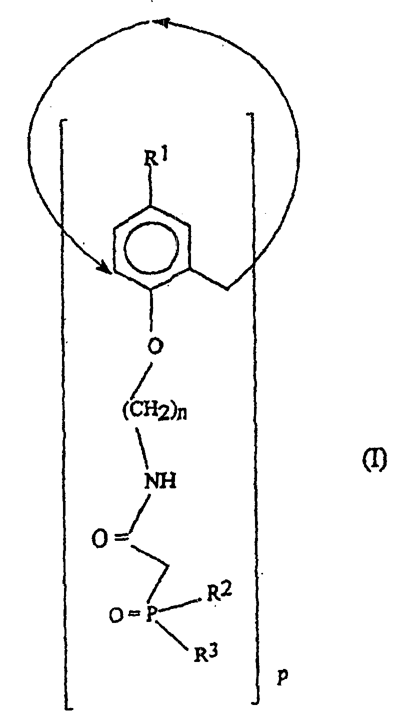 worin bedeuten:
- R¹ eine Alkyl- oder Arylgruppe oder ein Wasserstoffatom,
- R² und R³, die gleich oder verschieden sein können, Alkyl- oder Arylgruppen,
- n eine ganze Zahl von 2 bis 8, und
- p eine ganze Zahl von 4 bis 8.

2. Calixaren nach Anspruch 1, worin p für die Zahl 4 steht.

3. Calixaren nach Anspruch 1 oder 2, worin R¹ die tert-Butylgruppe darstellt.

4. Calixaren nach einem der Ansprüche 1 bis 3, worin R² und R³ die Phenylgruppe steht.

5. Calixaren nach einem der Ansprüche 1 bis 4, worin n für eine ganze Zahl von 2 bis 5 darstellt.

6. Calixaren nach Anspruch 1, worin bedeuten:
- R¹ die tert-Butylgruppe,
- R² und R³ die Phenylgruppe,
- n die Zahl 2, 3 oder 4 und
- p die Zahl 4.

7. Verfahren zur Herstellung eines Calixarens der Formel: 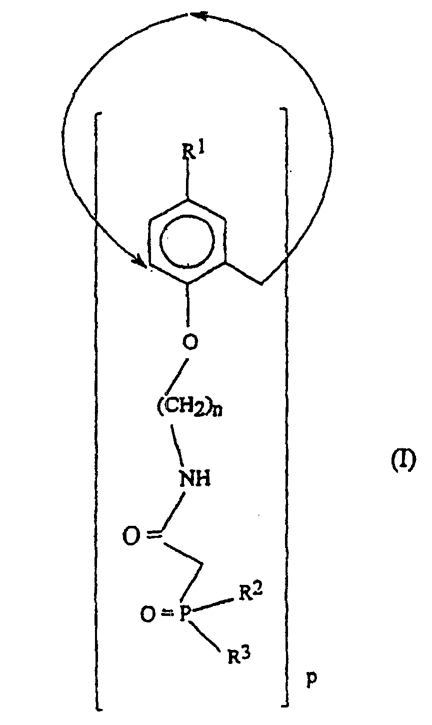 worin bedeuten:
- R¹ eine Alkyl- oder Arylgruppe oder ein Wasserstoffatom,
- R² und R³, die gleich oder verschieden sein können, Alkyl- oder Arylgruppen,
- n eine ganze Zahl von 2 bis 8, und
- p eine ganze Zahl von 4 bis 8,
das darin besteht, dass man ein Aminoalkoxy-Derivat von Calixaren der Formel 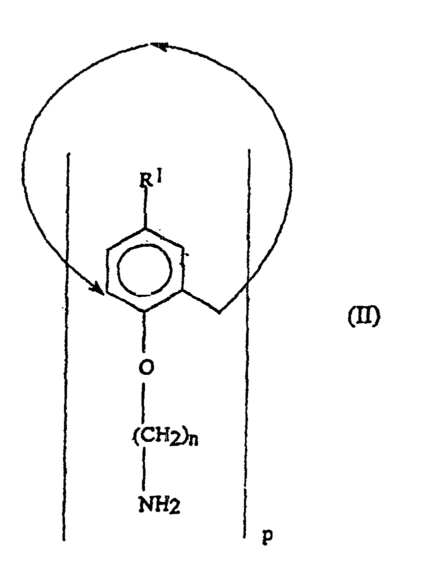 worin R¹, n und p wie oben definiert sind,
mit einem Phosphinoxidacetat der Formel reagieren lässt: 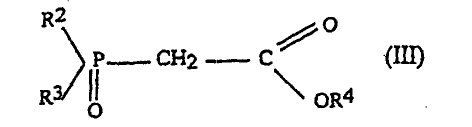 worin R² und R³ wie oben definiert sind und R⁴ die p-Nitrophenyl- oder 2,4-Dinitrophenylgruppe darstellt.

8. Verfahren nach Anspruch 7, bei dem das Aminoalkoxy-Derivat von Calixaren der Formel (II), worin n > 2 ist, hergestellt wird nach einem Verfahren, das die folgenden Stufen umfasst:
1) Umsetzung eines Calixarens der Formel: 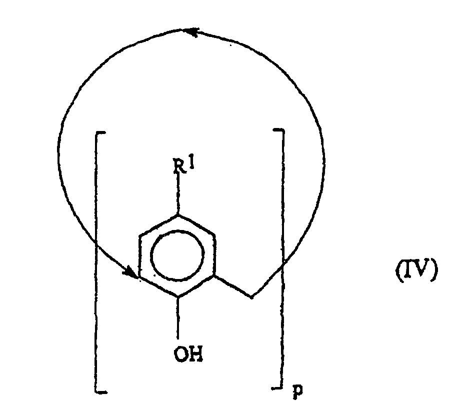 worin R¹ und p die in Anspruch 7 angegebene Bedeutung haben,
mit einem N-3-(Bromoalkyl)phthalimid der Formel 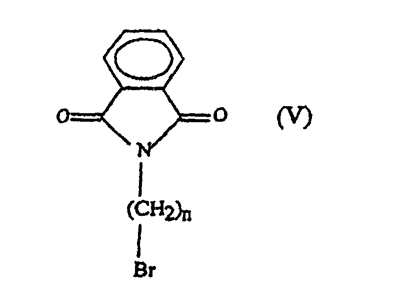 worin n die in Anspruch 7 angegebene Bedeutung hat,
zur Herstellung eines (3-Phthalimido-alkoxy)calixarens der Formel: 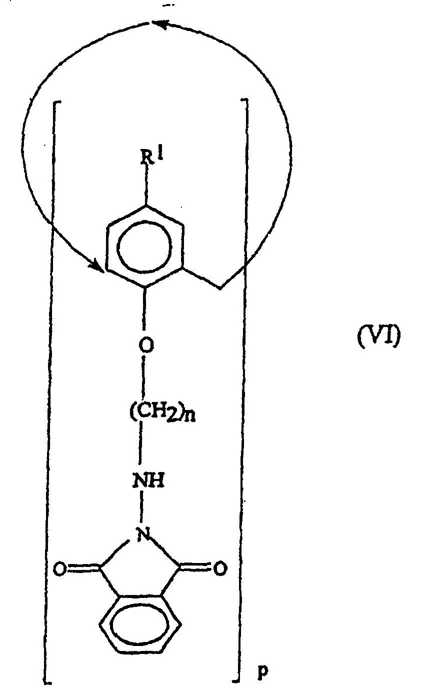 und
2) Umsetzung der Verbindung der Formel (VI) mit Hydrazin.

9. Verfahren nach Anspruch 7, bei dem man das Aminoalkoxy-Derivat vol Calixaren der Formel (II) mit n = 2 nach einem Verfahren herstellt, das die folgenden Stufen umfasst:
1) Umsetzung eines Calixarens der Formel: 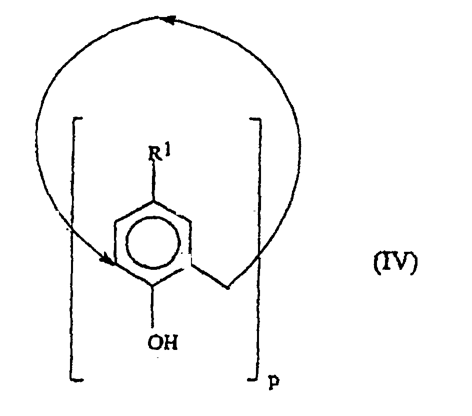 worin R¹ und p die in Anspruch 7 angegebenen Bedeutungen haben,
mit einem Alkylbromacetat zur Herstellung des Calixaren-Derivats der Formel: 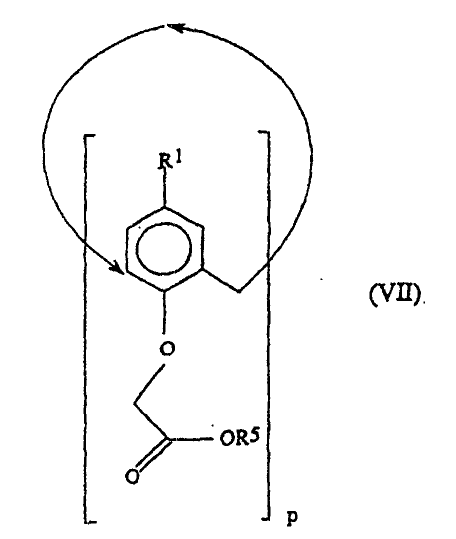 worin R¹ die in Anspruch 7 angegebene Bedeutung hat und R⁵ eine Alkylgruppe darstellt,
2) Reduktion des Calixaren-Derivats der Formel (Vll) zur Herstellung des Hydroacylderivats der Formel: 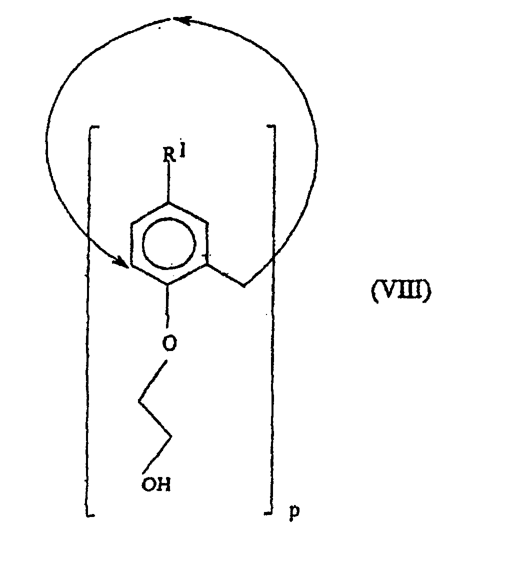
3) Umsetzung des Hydroxylderivats der Formel (VIII) mit Tosylchlorid zur Herstellung des Tosyldervats der Formel: 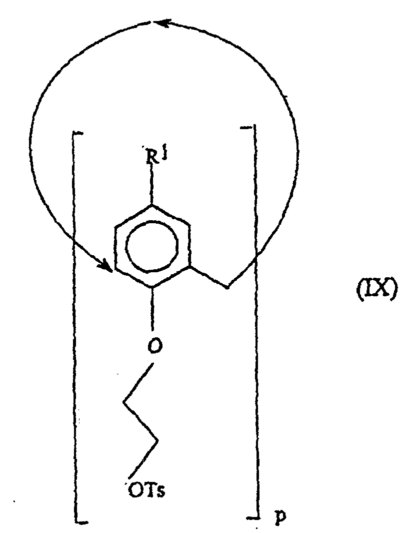 worin Ts für die Tosylgruppe steht, und
4) Umsetzung des Tosylderivats der Formel (IX) mit NaN₃, woran sich eine katalytische Hydrierung anschließt, zur Herstellung des Calixarens der Formel (II), worin n = 2.

10. Verfahren zur Abtrennung mindestens eines Metalls, ausgewählt aus den Lanthaniden und den Aktiniden, die in einer wässrigen Lösung enthalten sind, das darin besteht, dass man die wässrige Lösung mit einer damit nicht mischbaren Phase in Kontakt bringt, die mindestens ein Calixaren der Formel umfasst: 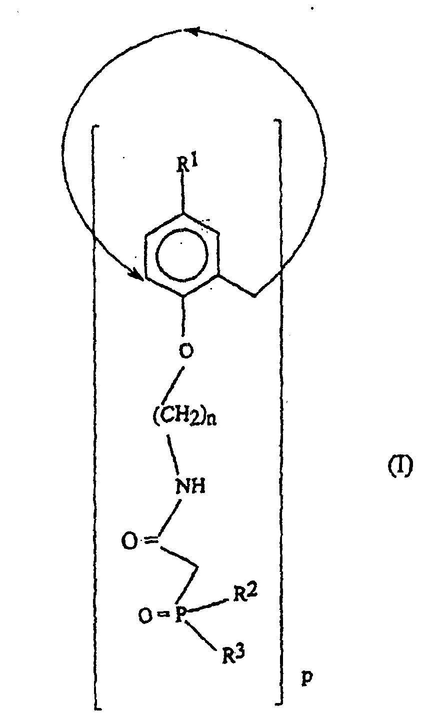 worin bedeuten:
- R¹ eine Alkyl- oder Arylgruppe oder ein Wasserstoffatom,
- R² und R³, die gleich oder verschieden sein können, Alkyl- oder Arylgruppen,
- n eine ganze Zahl von 2 bis 8, und
- p eine ganze Zahl von 4 bis 8,
um das (die) Metall(e) in die damit nicht mischbare Phase zu extrahieren.

11. Verfahren nach Anspruch 10, bei dem die wässrige Lösung eine Salpetersäure-Lösung ist, die 1 bis 4 mol/l HNO₃ enthält.

12. Verfahren nach Anspruch 10 oder 11, bei dem die nicht mischbare Phase eine Lösung des (der) Calixarens (Calixarene) der Formel (I) in einem organischen Lösungsmittel ist.

13. Verfahren nach Anspruch 12, bei dem das organische Lösungsmittel ein Nitrophenylalkylether ist.
